# EUROPÄISCHE PATENTSCHRIFT

(11) **EP 0 572 621 B1**
(45) Veröffentlichungstag und Bekanntmachung des Hinweises auf die Patenterteilung: **18.09.1996**
(21) Anmeldenummer: 93901034.4
(22) Anmeldetag: 16.12.1992
(51) Int. Cl.: G01F 3/10, G01F 3/06, B67D 5/20

(54) **VORRICHTUNG ZUM MESSEN VON FLÜSSIGKEITSMENGEN IN ZAPFSÄULEN VON KRAFTFAHRZEUG-TANKSTELLEN**
DEVICE FOR MEASURING THE AMOUNT OF LIQUID IN THE GASOLINE PUMPS OF MOTOR VEHICLE SERVICE STATIONS
DISPOSITIF DE MESURE DE LA QUANTITE DE LIQUIDE DANS DES POMPES A ESSENCE DE STATIONS-SERVICE DE VEHICULES A MOTEUR

(30) Priorität: 19.12.1991 DE 4142062
(43) Veröffentlichungstag der Anmeldung: 08.12.1993
(73) Patentinhaber: TANKANLAGEN SALZKOTTEN GMBH, D-33154 Salzkotten (DE)
(72) Erfinder: KÖPL, Manfred, D-4630 Bochum (DE); HÜSTER, Bernhard, D-4799 Borchen/Alfen (DE); HARDING, Alfons, D-4799 Borchen/Alfen (DE); MOSER, Werner, D-8508 Wendelstein (DE); BLOSS, Hans-Ulrich, D-8500 Nürnberg 60 (DE); ALBRECHT, Klaus, A-6890 Lustenau (AT)
(74) Vertreter: Rieder, Hans-Joachim, Dr.
(86) Internationale Anmeldenummer: EP9202926
(87) Internationale Veröffentlichungsnummer: WO9312405

(56) Entgegenhaltungen:
- EP-A- 0 326 380
- DE-C- 654 978
- FR-A- 2 594 221

## Beschreibung

Die Erfindung bezieht sich auf eine Vorrichtung zum Messen von durch eine Leitung strömenden Flüssigkeitsmengen nach dem Prinzip des Verdrängerzählers mit einem Zählwerk.

Anwendungsgebiet der Erfindung ist die Durchflußmessung von flüssigen Kraftfahrzeug-Brennstoffen, wie Benzin, beim Betankungsvorgang in Zapfsäulen von Tankstellen.

Es ist allgemein bekannt und üblich, zum Messen von Flüssigkeitsmengen in Zapfsäulen von Kraftfahrzeug-Tankstellen Verdrängerzähler, beispielsweise Flüssigkeitsmeßmotoren in Kolbenschieberbauart, einzusetzen. Derartige Flüssigkeitsmeßmotoren haben den Nachteil, daß durch die periodische Beaufschlagung der einzelnen Arbeitsräume die zu messende Flüssigkeit mehrfach umgelenkt wird, wodurch die Meßkurve des pro Arbeitszyklus bzw. Umdrehung geförderten Durchflußvolumens nicht linear verläuft und die für Kolbenmeßmotoren typische Welligkeit aufweist.

Eine Meßvorrichtung für Flüssigkeiten allgemeiner Art mit einer Schraubenspindelanordnung, die von der Flüssigkeit axial durchströmt und hierbei in Drehung versetzt wird, ist aus der DE-PS 654 978 bekannt. Einer der Schneckenkörper ist hierbei mit einem Triebrad versehen, das unter Zwischenschaltung eines Übersetzungsgetriebes die Zeiger eines mechanischen Zählwerks antreibt.

Meßvorrichtungen dieser Art sind für den Einsatz zum Messen von Kraftfahrzeug-Brennstoffen in Zapfsäulen von Tankstellen nicht verwendet worden. Sie ermöglichen keinen Eingriff zur Korrektur der gemessenen Volumenwerte. Flüssigkeitsmeßvorrichtungen in Zapfsäulen von Kraftfahrzeug-Tankstellen unterliegen jedoch dem eichpflichtigen Verkehr und müssen regelmäßig einjustiert und nachgestellt werden.

Erst höhere Fertigungsgenauigkeiten bei der Serienherstellung von Schraubenspindeln eröffnen den Weg eine Schraubenspindelanordnung für andere als bisher für Pumpzwecke, nämlich als Meßwerk für dünnflüssige Kraftfahrzeug-Brennstoffe, wie Benzin, einzusetzen.

Aus der DE 39 42 857 C1 ist es bei Verwendung eines allgemein üblichen Kolbenmessers für das abgegebene Kraftstoffvolumen bekannt, den Kolbenmesser mit einem optischen Impulsgeber zu koppeln, dessen in Abhängigkeit vom gemessenen Kraftstoffvolumen erzeugte Impulse in eine Preisrechner eingeführt werden. Die für Flüssigkeitsmeßmotoren in Kolbenschieberbauart eingangs genannten Nachteile treffen auch für diese bekannte Bauart zu.

Eine eichfähige Vorrichtung, mit welcher der Durchfluß gemessen und auf einen Sollwert abgeglichen werden kann, geht aus der US-PS 4 831 866 hervor. Gemessen wird mit einer volumetrischen Verdrängerkammer. Der Abgleich erfolgt durch elektronischen Eingriff in die Impulsverarbeitung derart, daß ein Eichfaktor zur Korrektur der vom Durchflußmesser abgeleiteten Pulszahl automatisch während eines Betankungsvorganges gewonnen wird, und zwar nach bestimmten Betriebs- und Abgabeintervallen, die jeweils einem bestimmten Flüssigkeitsvolumen entsprechen.

Die Kompensation eines Systemsfehlers in bezug auf den Nominalwert eines Kammervolumens bei der Flüssigkeitsströmung durch einen Ovalrad-Verbrauchszähler ist aus der FR 25 94 221 A1 bekannt. Durch Verwendung einer Hallsonde wird die einem bestimmten Flüssigkeitsdurchsatz zugeordnete Impulszahl ermittelt und rechnerisch mit einem bestimmten Korrekturfaktor beaufschlagt. Die Weiterverarbeitung der gemessenen bzw. korrigierten Impulse in einer Impulsabgleich und Impulsformerstufe ist bei der bekannten Vorrichtung nicht vorgesehen.

Es ist die Aufgabe der Erfindung, bei einer Vorrichtung der eingangs genannten Art, welche nach dem Prinzip eines Verdrängerzählers arbeitet, den Förderweg bei der volumetrischen Erfassung des bei einem Betankungsvorgang für ein Kraftfahrzeug abgegebenen Kraftstoffes geradliniger als bei Kolbenmeßmotoren zu gestalten und eine funktionell mit einer durch Kolbenhubverstellung vergleichbare Justierung des Fördervolumens zu ermöglichen.

Diese Aufgabe wird erfindungsgemäß durch die im Anspruch 1 angegebenen Merkmale gelöst.

Im Vergleich zu Flüssigkeitsmeßmotoren in Kolbenschieberbauart ergibt sich bei Schraubenspindelzählern der Vorteil eines geradlinigeren Durchflusses der zu messenden Flüssigkeit und darüber hinaus eine einfachere und weniger störanfällige Bauart mit entsprechend weniger Bauteilen. Schraubenspindelzähler sind zweckmäßigerweise aus metallischen Werkstoffen hergestellt. Hierdurch ergeben sich Vorteile im Vergleich zu Flüssigkeitsmeßmotoren in Kolbenschieberbauart, die Kunststoffteile, beispielsweise Dichtlippen aus Kunststoff aufweisen. Ferner liegen bessere Durchflußwiderstände für die durchströmende Flüssigkeit sowie eine höhere Beständigkeit der Bauteile in bezug auf aggressive Bestandteile der zu messenden Flüssigkeit.

Die Impulsformerstufe ist vorgesehen, um die vom Meßwertumformer gelieferten, Signale in Impulse umzusetzen, die dann im elektrischen Zählwerk ausgewertet werden können. Für die Impulsbildung werden in der Regel Schwellwertkriterien herangezogen, meist der Nulldurchgang des vom Meßwertumformer gelieferten Ausgangssignals. Bei geringen Strömungsgeschwindigkeiten des zu messenden Flüssigkeitsvolumens, insbesondere bei anlaufender bzw. nachlassender Strömung des eingefüllten Kraftstoffs zu Beginn bzw. am Ende eines Tankvorganges, entstehen zur abgegebenen Menge verzerrte oder nichtlineare Ausgangssignale zwischen Zählimpulsen. Die Impulsformerstufe wirkt diesem Verhalten entgegen.

Die Impulse werden weiterhin dazu benutzt, durch Impulsabgleich die Mengenwertigkeit der Impulse eichen bzw. nacheichen zu können. Mittels einer solchen elektronischen Korrektur lassen sich die gemessenen Volumenwerte in Anpassung an größere Differenzen zwischen Betriebstemperatur und Auslegungstemperatur bzw. an die sich daraus ergebenden Dichtedifferenzen angleichen.

In vorteilhafter Ausgestaltung der Erfindung ist der Impulsgeber als mit einem der Schneckenkörper verbundene Fächerscheibe oder Zahnscheibe ausgebildet.

In weiterer Ausgestaltung der Erfindung sind die Ausgangssignale des Meßwertumformers bei veränderten betrieblichen oder klimatischen Parametern durch Beaufschlagung mit einem Korrekturwert in ihrer Größe oder Folgefrequenz nachstellbar.

Weitere Einzelheiten und Merkmale ergeben sich aus den Unteransprüchen.

Ein in der Beschreibung näher erläutertes Ausführungsbeispiel der Vorrichtung zum Messen von Flüssigkeitsmengen ist in der Zeichnung wiedergegeben. Es zeigt:
- Fig. 1: eine schematisch gehaltene Innenansicht einer Zapfsäule mit im Schnitt dargestelltem Flüssigkeitsmeßmotor,
- Fig. 2: einen Schnitt durch einen Schraubenspindelzähler als Flüssigkeitsmeßmotor.

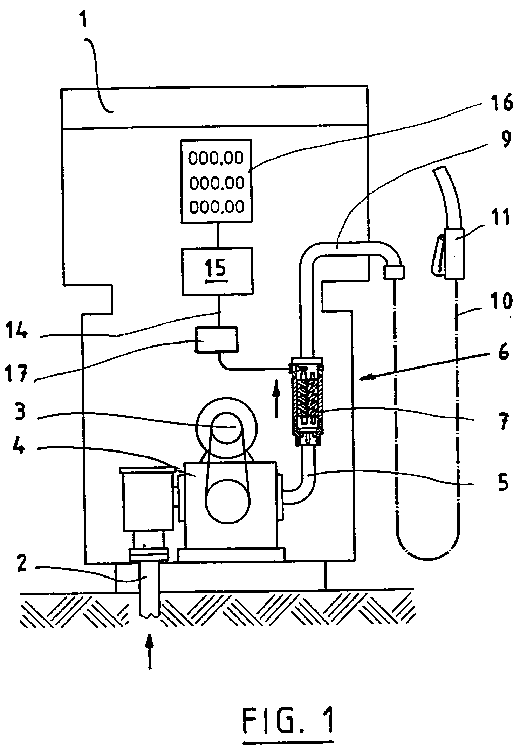

Von einem in Fig. 1 der Zeichnung nicht dargestellten, unterirdisch verlegten Lagerbehälter für Kraftstoff, beispielsweise Benzin, führt ein Ansaugrohr 2 durch den Sockel eines Zapfsäulengehäuses 1 zu einer Kraftstoff-Förderpumpe 4, die von einem eigenen Antriebsmotor 3 antreibbar ist. Der bei einem Betankungsvorgang eines Kraftfahrzeuges hochgeförderte Kraftstoff führt über eine Rohrleitung 5 zu einem als Flüssigkeitsmeßmotor wirksamen Schraubenspindelzähler 6 im unteren explosionsgefährdeten Bereich des Zapfsäulengehäuses 1 und weiter über eine Rohrleitung 9 zu einem Zapfschlauch 10 mit endseitig angeschlossenem Zapfventil 11.

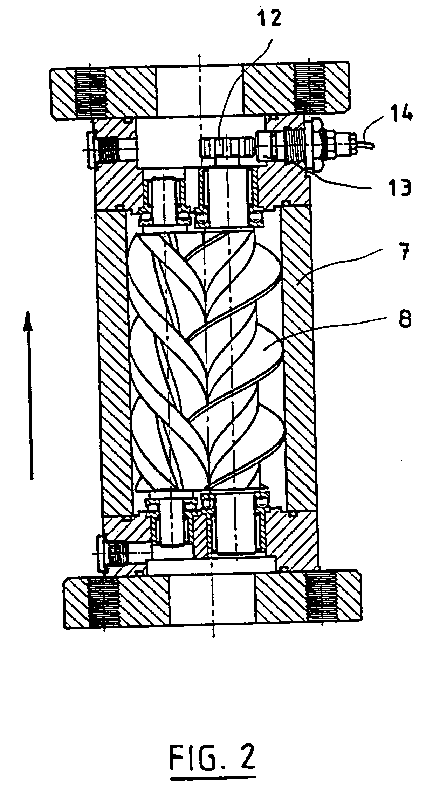

Wie Fig. 2 zeigt, sind in einem Rotorgehäuse 7 des Schraubenspindelzählers 6 zwei formschlüssig ineinandergreifende, schraubenförmige Schneckenkörper 8 gelagert, welche durch die beim Betanken eines Kraftfahrzeuges axial durchströmende Flüssigkeit in Umdrehungen versetzt werden. Einer dieser Schneckenkörper 8 wirkt als Ausgangswelle des Flüssigkeitsmeßmotors und trägt endseitig eine impulsgebende Vorrichtung 12 in Form einer Fächerscheibe oder Zahnscheibe. Mit Hilfe dieser Scheibe werden die Umdrehungen des mit dieser Scheibe verbundenen Schneckenkörpers 8 in einem das Rotorgehäuse 7 durchsetzenden Meßwertumformer 13 in drehzahlabhängige Signale umgesetzt, welche von einer Impulsabgleich und -formerstufe 17 in Impulse umgeformt werden, deren Größe, Anzahl oder Folgefrequenz direkt proportional zur getankten Kraftstoffmenge ist.

Der Impulsgeber des Meßwertumformers 13 ist außerhalb des Rotorgehäuses 7 mit einer elektrischen Leitung 14 verbunden, die zu einem elektronischen Zählwerk 15 mit Recheneinheit führt, welches mit einem Anzeigedisplay 16 verbunden ist, um dem Tankkunden in einem Fenster des Zapfsäulengehäuses 1 Grundpreis, getankte Kraftstoffmenge und zu zahlenden Preis anzuzeigen. Dabei sind die nach Umformung der Meßdaten gewonnenen Tankdaten einem jeder Längsseite einer Tankinsel mit mehreren Zapfsäulen zugeordneten Monitor zuführbar und für den Tankkunden ablesbar.

Der Meßwertumformer 13 ist mit einer Impulsabgleich und Impulsformerstufe 17 verbunden. Die Ausgangssignale des Meßwertumformers 13 lassen sich in dieser Impulsabgleichs und Impulsformerstufe 17 durch Änderung ihrer Impulsgröße oder Folgefrequenz durch einen bei Eichung gewonnenen Korrekturwert derart elektronisch nachstellen, daß sich ändernde betriebliche oder klimatische Parameter berücksichtigt werden, bevor sie dem elektronischen Zählwerk 15 mit Recheneinheit zugeführt werden. Diese elektronische Justierung wird durch hierfür bestimmtes Personal vorgenommen und bei Nacheichung entsprechend wiederholt. Bis zum jeweils nächsten Eichvorgang bleibt der Korrekturwert konstant.

Durch die Impulsabgleich und Impulsformerstufe 17 können die bei Rotation der Schneckenkörper 8 erzeugten Impulse zu Eichzwecken elektronisch justiert werden, bevor sie dem elektronischen Zählwerk 15 mit Recheneinheit zugeführt werden. Dabei werden diese Impulse in ihrer Größe oder Folgefrequenz durch extern gewonnene, von der Recheneinheit des elektronischen Zählwerks 15 abgeleitete Steuer- oder Kontrollimpulse derart verändert, daß sie beispielsweise auf ein arithmetisches Verhältnis zur Durchflußmenge des getankten Kraftstoffes abgestimmt werden. Diese Steuer oder Kontrollimpluse sind in der Recheneinheit des elektronischen Zählwerks 15 abhängig von bestimmten betrieblichen oder klimatischen Parametern durch hierzu bestimmtes Personal einstellbar oder bei Bedarf, etwa zu Eichzwecken, nachstellbar.

## Patentansprüche

1. Vorrichtung zum Messen von flüssigen Kraftstoffmengen mit einer als verdrängungszählerarbeitenden, axial durchströmten Schraubenspindelanordnung (6), bestehend aus mindestens zwei in einem Rotorgehäuse (7) formschlüssig ineinandergreifenden, schraubenförmigen Schneckenkörpern, von denen der eine Schneckenkörper (8) einen Impulsgeber (12) trägt, der in einem im Gehäuseinneren angeordneten Meßwertumformer (13) sensorisch drehzahlabhängig elektrische Signale erzeugt, und mit einem elektrischen Zählwerk (15) mit Recheneinheit zur Anzeige von aus diesen Signalen gewonnenen Daten, dadurch gekennzeichnet, daß die Vorrichtung in Zapfsäulen (1) von Kraftfahrzeug-Tankstellen Verwendung findet und daß eine Impulsabgleich und Impulsformerstufe (17) dem Zählwerk (15) vorgeschaltet ist, der die erzeugten elektrischen Signale zugeführt sind und in welcher aus den Signalen elektronisch justierte Impulse geformt werden.

2. Vorrichtung nach Anspruch 1, dadurch gekennzeichnet, daß der Impulsgeber (12) als mit einer, dem Schneckenkörper verbundenen Fächerscheibe oder Zahnscheibe ausgebildet ist.

3. Vorrichtung nach Anspruch 1, dadurch gekennzeichnet, daß die Impulse in ihrer Größe oder Folgefrequenz auf ein arithmetisches Verhältnis zur Durchflußmenge abgestimmt sind.

4. Vorrichtung nach Anspruch 3, dadurch gekennzeichnet, daß die Impulse durch extern gewonnene Steuer- oder Kontrollimpulse veränderbar sind.

5. Vorrichtung nach Anspruch 4, dadurch gekennzeichnet, daß die Steuer- oder Kontrollimpulse von der Recheneinheit des elektrischen Zählerwerks (15) abgeleitet und in Abhängigkeit von betrieblichen oder klimatischen Parametern einstellbar und nachstellbar sind.

6. Vorrichtung nach Anspruch 1, dadurch gekennzeichnet, daß die nach Umformung der Meßdaten im Meßumformer (13) gewonnenen Tankdaten einem jeder Längsseite einer Tankinsel mit mehreren Zapfsäulen zugeordneten Monitor zugeführt sind und für den Tankkunden ablesbar sind.

7. Vorrichtung nach Anspruch 1, dadurch gekennzeichnet, daß im Rotorgehäuse (7) eine Zentralspindel und zwei mit ihr kämmende Laufspindeln gelagert sind und daß der Impulsgeber (12) mit der Zentralspindel verbunden ist.

8. Vorrichtung nach Anspruch 1, dadurch gekennzeichnet, daß der Impulsgeber (12) mit dem Meßwertformer (13) induktiv zusammenwirkt.

## Claims

1. Device for measuring quantities of liquid fuel having a screw spindle arrangement (6) with axial flow functioning as a displacement meter, consisting of at least two helical screw bodies engaging in one another in form-locking manner in a rotor housing (7), of which one screw body (8) carries a pulse generator (12) which in a measuring transducer (13) arranged in the interior of the housing generates electrical signals depending on the detected number of revolutions, and having an electric counter (15) with a computer for the display of data obtained from these signals, characterised in that the device is used in dispensing pumps (1) of motor vehicle filling stations and that connected ahead of the counter (15) there is a pulse calibration and pulse shaper stage (17) to which the electrical signals generated are fed and in which electronically adjusted pulses are formed from the signals.

2. Device according to Claim 1, characterised in that the pulse generator (12) is constructed as having a fan type lock washer or tooth lock washer connected to the screw body.

3. Device according to Claim 1, characterised in that the pulses are matched in their size or repetition frequency to an arithmetic relationship to the flow quantity.

4. Device according to Claim 3, characterised in that the pulses can be modified by externally obtained control or check pulses.

5. Device according to Claim 4, characterised in that the control or check pulses are derived from the compter of the electrical counter (15) and can be set and reset as a function of operational or climatic parameters.

6. Device according to Claim 1, characterised in that the fuelling data obtained after conversion of the measured data in the measuring transducer (13) are fed to a monitor associated with each longitudinal side of a filling island having several dispensing pumps and can be read by the refuelling customer.

7. Device according to Claim 1, characterised in that in the rotor housing (7) a central spindle and two running spindles meshing with it are mounted and that the pulse generator (12) is connected to the central spindle.

8. Device according to Claim 1, characterised in that the pulse generator (12) works together with the measuring transducer (13) by inductance.

## Revendications

1. Dispositif pour la mesure de quantités de carburants liquides au moyen d'un appareil à vis (6) traversé axialement et travaillant en compteur volumétrique, comprenant dans un boîtier de rotor (7) au moins deux corps hélicoïdaux en forme de vis et engrenant l'un dans l'autre en conjugaison de forme, l'un de ces corps hélicoïdaux portant un générateur d'impulsions (12) qui crée dans un organe de mise en forme de la valeur de mesure (13) logé dans un boîtier intérieur des signaux électriques fonction de la vitesse de rotation, ainsi qu'un compteur électrique (15) avec un unité de comptage pour l'indication des données obtenues à partir de ces signaux, caractérisé en ce que le dispositif est utilisé dans des colonnes de distribution (1) de stations-service de carburant pour véhicules automobiles, et en ce qu'un étage d'égalisation et de formation d'impulsions (17) est disposé en amont du compteur (15),et reçoit les signaux électriques créés, et dans lequel sont formées des impulsions ajustées électroniquement à partir des signaux.

2. Dispositif selon la revendication 1, caractérisé en ce que le générateur d'impulsions (12) est réalisé sous la forme d'une roue ou disque denté accouplé au corps hélicoïdal.

3. Dispositif selon la revendication 1, caractérisé en ce que les impulsions sont modulées en amplitude ou en fréquence de répétition selon un rapport arithmétique par rapport au débit.

4. Dispositif selon la revendication 3, caractérisé en ce que les impulsions sont susceptibles d'être modifiées par une impulsion de commande ou de contrôle générée extérieurement.

5. Dispositif selon la revendication 4, caractérisé en ce que l'impulsion de commande ou de contrôle est dérivée de l'unité de calcul du compteur électrique (15) et est susceptible d'être réglée et modifiée en fonction de paramètres d'exploitation ou climatiques.

6. Dispositif selon la revendication 1, caractérisé en ce que les données de distribution obtenues après mise en forme des données de mesure dans l'organe de mise en forme de la valeur de mesure (13) sont délivrées à un écran de contrôle disposé de chaque côté longitudinal d'une aire de station-service associé à plusieurs colonnes de distribution, et susceptibles d'être lues par les clients de la station-service.

7. Dispositif selon la revendication 1, caractérisé en ce que, dans le boîtier de rotor (7) sont montées à rotation une vis centrale et deux vis rotatives engrenant avec celle-ci, et en ce que le générateur d'impulsions (12) est accouplé à la vis centrale.

8. Dispositif selon la revendication 1, caractérisé en ce que le générateur d'impulsions (12) coopère par induction avec l'organe de mise en forme de la valeur de mesure (13).
